# EUROPEAN PATENT APPLICATION

(11) **EP 4 071 348 A1**
(43) Date of publication of application: **12.10.2022**
(21) Application number: 20895527.8
(22) Date of filing: 03.11.2020
(51) Int. Cl.: F03B 17/02, F03B 17/00, F03B 17/04

(54) **UNIT FOR GENERATING ELECTRICITY USING GRAVITATIONAL ENERGY**

(30) Priority: 04.12.2019 ES 201931074
(71) Applicant: Mendibe Albisu, Aitor, 20830 Mutriku (Gipuzkoa) (ES)
(72) Inventor: Mendibe Albisu, Aitor, 20830 Mutriku (Gipuzkoa) (ES)
(74) Representative: Urizar Barandiaran, Miguel Angel
(86) International application number: PCT/ES2020/070672
(87) International publication number: WO 2021/111017

(57) **Abstract**

Installation for generating electricity utilizing gravitational energy which, in addition to the electricity generator (G), consists of:
• two cylinders (1a), (1b), each one with two closed chambers of variable capacity, interconnected through a conduit (3) that forms with them a closed circuit with enough liquid to fill one of said chambers in one of them; arranged on
• two support structures (5a), (5b) carrying them and suspended from a fixed location (6) with the possibility of turning between two end positions delimited by two rotational stops (81), (82);
• at least one brake lever (9) for each cylinder (1a), (1b);
• a chain (4) joined to said cylinders (1a), (1b) and equipped with a load compensator (41);
• means so that said cylinders (1a), (1b) starting with a full one on a lower level and the other one empty on an upper level, then interchange their positions.

## Description

### Object of the invention

The object of the invention refers to an installation for generating electrical energy utilizing the principle of operation of gravitational potential energy.

### Background of the invention

In the current state of the art, installations for transforming renewable energies into electrical energy generate pressure in liquids by mechanical or kinetic means and also utilizing height differences or forces of nature. Problems not solved in the known installations, are rooted in their dependence on weather, and in that they cannot work in all places and/or at all times. Thus, those that are based on offshore energy cannot work where there is no sea, and work with very low performance when there are no waves or spring tides; those that are based on wind energy cannot work when there is no wind; and those that are based on solar energy cannot work, or work at very low performance, where there is no sunlight or at night.

### Technical problem to be resolved

Endeavouring to solve this problem, the applicant has developed, for example, among others, the system for generating electrical energy described in document ES2690559 that utilizes the quality that objects float or sink in a liquid depending on their density.

Advantages of the installation, according to the invention described in document ES2690559, lie in that it is totally eco-friendly, constant, inexhaustible and controllable at all times.

Disadvantages that the applicant has been able to observe lie in that, at affordable costs in order for the installation to be profitable, it is not always possible to have large premises needed, or enough water to fill it.

### Description of the invention

The object of the invention is an installation for generating electricity that, with respect to the foregoing one described in document ES2690559, eliminates need to use large premises and all the water contained in them.

The object of the invention is based on the principle of operation of gravitational potential energy, according to which, given two cylinders, an empty one arranged at an upper level and the other one full of liquid at a lower level and mutually interconnected by a conduit that forms with them a closed circuit, liquid of the lower cylinder subjected to pressure can ascend and the upper cylinder that generates a depression can aspirate this liquid so that between both the liquid rises to the height of the upper cylinder through the conduit.

The installation for generating electricity utilizing gravitational energy, according to the invention, is characterized in that, in addition to the electricity generator, it consists of at least:
- two cylinders, each with two closed chambers of variable capacity, said cylinders being mutually interconnected by a conduit that forms with them a closed circuit provided with liquid sufficient to completely fill one of said chambers in one of them;
- both support structures carrying said cylinders and suspended from a fixed location with the possibility of turning between two end positions delimited by two rotational stops;
- at least one brake lever that activates when one of the cylinders, empty, reaches on its support structure the upper position and deactivates when said cylinder is full;
- a chain that connects to each other said cylinders or their support structures and is equipped with a load compensator;
- means so that said cylinders come to interchange their positions so that, starting from the position in which one is full of liquid on a lower level and the other empty one on a lower level, they reverse and turn their positions, activating the electricity generator during this ascent and descent with turning.

Starting from this basic structure, any alternative embodiments that do not essentially alter, change or modify the proposal are included in the object of the invention.

In particular, the installation, according to the invention, is also characterized in that:
- it has a lever in the conduit that forms part of the closed circuit, to allow or close the passage of liquid through said conduit;
- The support structures of the cylinders are suspended from the fixed location using, at least two chains that connect their respective ends to support structures and interlock in at least two pairs of compensator pinions arranged in said fixed location and connected to the electricity generator.

It is indistinct, and is included in the object of the invention, to have any number of pairs of cylinders synchronizing operation of all of them for a common electrical or mechanical output.

Advantages of the installation, according to the invention, lie in that it is totally eco-friendly, renewable, constant, inexhaustible and controllable at all times because:
- at any time, and at the user's will, it can be started or stopped by simply allowing or not allowing passage of the liquid from one cylinder to the other through the conduit that connects them;
- it utilizes gravitational energy; this being constant and continuous;
- it also does not depend on the weather, and can work at all times.

Other configurations and advantages of the invention can be deduced from the following description, and from subsidiary claims.

### Description of the drawings

To better understand the object of the invention, a preferential form of embodiment is represented in the accompanying figures, subject to accessory changes that do not essentially alter it. In this case:

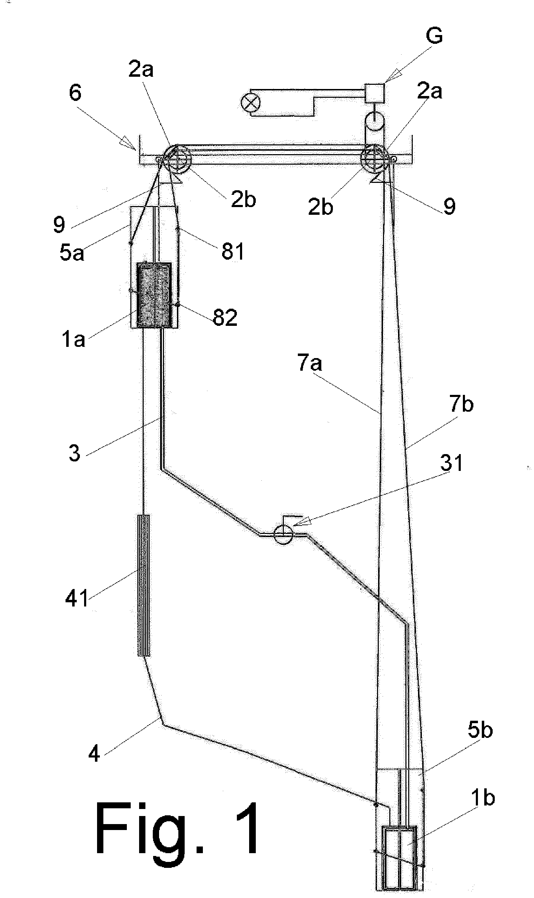

Figure 1 represents, in a general diagram, an installation for generating electricity, according to the invention in one of its phases of operation and for a configuration that includes, at least, one component of each type.
Figure 2 represents general diagrams of four phases of operation (a), (b), (c) and (d) of the installation of the previous figure.

### Detailed description of a preferential embodiment

Described below is an example of practical, non-limiting embodiment of the present invention. Other modes of embodiment in which accessory changes are introduced that do not essentially alter it are in no way ruled out.

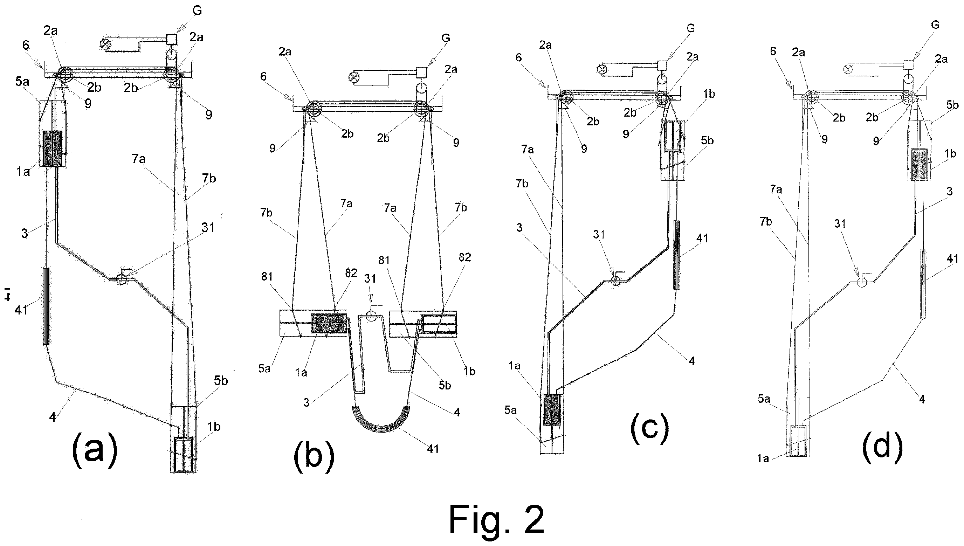

The object of the invention is based on the principle of operation of gravitational potential energy, according to which -see diagram (c) of figure 2-, given two cylinders (1a), (1b) one arranged at an upper level and the other one full of liquid at a lower level and mutually interconnected by a conduit (3) that forms with them a closed circuit, the liquid of the lower cylinder (1a) subjected to pressure can ascend and the upper cylinder (1b) that generates a depression can aspirate this liquid so that between both the liquid rises to the height of the upper cylinder (1b) through the conduit (3).

The installation for generating electricity utilizing the gravitational energy according to the invention, in addition to the electricity generator (G) consists, of at least, the following components and particularities:
- two cylinders (1a), (1b)
- two pairs of compensator pinions (2a), (2b)
- a transfer conduit (3) equipped with a cut-off lever (31)
- two support structures (5a), (5b)
- a chain (4) equipped with a load compensator (41)
- two pairs of chains (7a), (7b) to suspend support structures (5a), (5b) from a fixed location (6); and
- at least one brake lever (9) for each cylinder (1a), (1b).

The cylinders (1a), (1b) are identical. Each defines two closed chambers with variable capacity in one of which air enters/exits while in the other one water enters/exits. These cylinders (1a), (1b) are mutually interconnected by a conduit that forms with them a closed circuit provided with enough liquid to completely fill one of said chambers in one of them. Normally, the liquid used is water, although the possibility of using any other fluid is not ruled out.

In each cylinder (1a), (1b), both chambers operate in reverse:
- when in one of the cylinders (1a), (1b) one of the chambers that contains air increases its capacity and its corresponding one in the other cylinder is filled with air(1a), (1b) is emptied of air; and simultaneously
- when in one of the cylinders (1a), (1b) one of the chambers that contains water increases its capacity and its corresponding one in the other cylinder is filled with water (1a), (1b) is drained of water;

Description in greater detail is not made of the structure of said dual chamber cylinders (1a), (1b) as a very similar structure is described, for example, in the document ES2690559B1 of the applicant (that also uses a cylinder with two chambers with the particularity that one is open and the other is closed).

In the conduit (3) there is a lever (31) to allow or close the passage of liquid through the conduit (3) in one or another direction; that is, the lever (31) can be opened or closed, allowing or closing the passage of liquid at any time, regardless of the direction of circulation of the fluid in the conduit (3) at that time.

In case the installation has several pairs of cylinders (1a), (1b) each pair of cylinders (1a), (1b) are mutually interconnected by a conduit (3) equipped with a lever (31) and a solution is required to be included, for example a valve, for the synchronism of all of them.

The cylinders (1a), (1b) are arranged on two support structures (5a), (5b) suspended from a fixed location (6) with the possibility of turning between two end positions delimited by two rotational stops (81), (82).

A chain (4) connects between each other said cylinders (1a), (1b) or their support structures (5a), (5b). Said chain (4) is equipped with a load compensator (41).

To suspend the support structures (5a), (5b) at least a pair of chains (7a), (7b) are used and at least, two pairs of compensator pinions (2a), (2b) arranged in said fixed location (6) and connected to the electricity generator (G).

In each pair, the two chains (7a), (7b) are of different length.

In each pair, the two compensator pinions (2a), (2b) have different diameter and/or different number of teeth.

The chains (7a), (7b) connect their respective ends to the support structures (5a), (5b) this union being articulated.

One of the chains (7a) interlocks with the two large pinions (2a) while the other chain (7b) interlocks in the two small pinions (2b) of the mentioned sets of compensator pinions (2a), (2b).

There are two brake levers (9) each one connected to a cylinder (1a) or (1b). Each brake lever (9) activates/deactivates when the corresponding empty cylinder (1a) or (1b) reaches in its support structure (5a) or (5b) the upper position and it deactivates when said cylinder (1a) or (1b) has been filled.

With this structure and arrangement, in a complete cycle of operation, the cylinders (1a), (1b) and their support structures (5a), (5b) reverse and turn their positions simultaneously: one of the cylinders (1a) passes from being upright, full of liquid and at a lower level to being reversed, empty and at an upper level while the other cylinder (1b) passes from being reversed, empty and at an upper level to being upright, full of liquid and at a lower level.

Four phases (a), (b), (c), (d) of said cycle of operation have been represented in figure 2 for an example of embodiment in which:
- cylinders (1a), (1b) have been used of 320 millimetres in diameter; 2 metres long and weighing 250 kilograms
- support structures (5a), (5b) have been used weighing 50 kilograms
- a work height difference of 6 metres has been used
- cylinders (1a), (1b) with 160 litres capacity have been used
- large pinions (2a) of 130 teeth have been used
- small pinions (2b) of100 teeth have been used

### Phase 1:

The upper cylinder (1a) is loaded with water, weighs 460 Kg and the lower cylinder (1b) is empty, weighs 300 Kg, therefore, it descends and generates electricity in the generator (G).

Beginning with this phase 1 as represented in diagram (a) of figure 2, the cylinder (1a) (460 Kg) weighs more and descends; the cylinder(1b) (300 Kg) rises due to the difference in weight. When the cylinder descends (1a) the generator (G) turns causing the potential energy to be converted into electrical energy; thus, the cylinder (1a) descends and the cylinder (1b) ascends while they turn, causing the cylinder (1b) when it goes up to activate one of the brake levers (9) being blocked and not allowing it to rise or fall until the cylinder (1b) is filled with water and loses contact with the brake lever (9) allowing it to descend.

### Phase 2:

On descending, the long chain (7b) meshes in the large pinions (2a) and releases more length than the short chain (7a) that meshes in the small pinions (2b). The chains (7a), (7b) are fastened to the support structures (5a), (5b) and with some rotational stops (81), (82) placed on them, make them descend and ascend, turning the two cylinders (1a), (1b) with the structures (5a), (5b) that support them.

On descending, as represented in diagram (b) of figure 2, on the same horizontal shaft we have a chain (7a) meshed in the compensator pinions (2b) with100 teeth that releases less length of chain (6 metres) and the other chain (7b) meshed in the compensator pinions (2a) with 130 teeth that release more length of chain (7.80 metres) and turn the same number of times, as the two compensator pinions (2a), (2b) are on the same shaft, subject to the structure that supports the cylinders. On ascending the opposite occurs: one rises 6 metres and the other rises 7.80 metres thus causing the support structures (5a), (5b) to turn with the cylinders (1a), (1b) being supported on the rotational stops (81), (82) of the corresponding support structure (5a), (5b).

### Phase 3:

When the empty cylinder (1b) has gone up it activates its corresponding brake lever (9) and with the weight of said cylinder (1b), which is 250 Kg in the example, it begins to make the depression of aspiration. In turn, the other cylinder (1a), which is down and full of water, with the weight of the cylinder, which is 250 Kg in the example, it begins to exert the pressure of the rising water.

When the cylinder (1a) is below, as represented in diagram (c) of figure 2, it has more chain than the cylinder (1b) that is above. We compensate the weight of the chain with a load compensator (41) fastened to the cylinder (1b) and this makes a larger depression on the upper cylinder (1b) and in turn helps in the turning on ascending.

The pressure of the lower cylinder (1a) (250 Kg) and the depression made in the upper cylinder (1b) (250 Kg) also aided by the load compensator (41) of the chain (4) allows the water to rise 6 metres and reach phase 4, represented in diagram (d) of figure 2.

### Phase 4:

When the cylinder (1b) that is above is full, its corresponding brake lever (9) is deactivated allowing it to descend. The installation returns to phase 1 but, with the two cylinders (1a), (1b) changed in position: The upper cylinder (1b) is loaded with water, it weighs 460 Kg and the lower cylinder (1a) is empty, it weighs 300 Kg so it descends and generates electricity in the generator (G).

The materials, dimensions, proportions and, in general, those other accessory or secondary details that do not essentially alter, change or modify the proposal, can vary.

The terms in which this report is written are a true and fair reflection of the object described, and must be taken in their broadest sense, and never in a limiting manner.

## Claims

1. Installation for generating electricity utilizing gravitational energy, **characterized in that**, in addition to the electricity generator (G) it consists of at least:
a) two cylinders (1a), (1b), each one with two closed chambers of variable capacity; said cylinders (1a), (1b) being mutually interconnected through a conduit (3) that forms with them a closed circuit provided with liquid sufficient to completely fill one of said chambers in one of them; said cylinders (1a), (1b) being arranged on;
b) two support structures (5a), (5b) carrying said cylinders and suspended from a fixed location (6) with the possibility of turning between two end positions delimited by two rotational stops (81), (82);
c) At least one brake lever (9) for each cylinder (1a), (1b) that activates when it, empty, reaches on its support structure (5a) or (5b) the upper position and deactivates when it is full;
d) a chain (4) equipped with a load compensator (41), that mutually connects said cylinders(1a), (1b) or their support structures (5a), (5b);
e) means so that said cylinders (1a), (1b) come to interchange their positions so that, starting from the position in which each one is full of liquid at a lower level and the other one empty on an upper level, reverse and turn their positions, activating the electricity generator during this ascent and descent with turning.

2. Installation, according to claim 1, **characterized in that** it has a lever (31) to allow or close passage of liquid through the conduit (3).

3. Installation, according to claim 1, **characterized in that** the support structures (5a), (5b) are suspended from the fixed location (6) using at least one pair of chains (7a), (7b) that connect their respective ends to the support structures (5a), (5b) and mesh in at least, two pairs of compensator pinions (2a), (2b) arranged in said fixed location (6) and connected to the electricity generator (G).

4. Installation, according to claim 3, **characterized in that**, in each pair, the chains (7a), (7b) are of different length.

5. Installation, according to claim 3, **characterized in that**, in each pair, the compensator pinions (2a), (2b) have a different diameter and/or different number of teeth.

6. Installation, according to claim 5, **characterized in that** the ratio between the compensator pinions (2a) y (2b) is approximately 1,3:1.
